# EUROPÄISCHE PATENTSCHRIFT

(11) **EP 0 634 205 B1**
(45) Veröffentlichungstag und Bekanntmachung des Hinweises auf die Patenterteilung: **09.02.2000**
(21) Anmeldenummer: 94111056.1
(22) Anmeldetag: 15.07.1994
(51) Int. Cl.: B01D 53/66, B01D 53/86, B01J 35/06

(54) **Katalysator zum Spalten von Ozon**
Catalyst for removing ozone
Catalyseur pour éliminer de l'ozone

(30) Priorität: 15.07.1993 DE 9310495 U; 15.07.1993 DE 9310516 U
(43) Veröffentlichungstag der Anmeldung: 18.01.1995
(73) Patentinhaber: Engelhard Italiana S.p.A., 00131 Roma (IT)
(72) Erfinder: Beitz, Hans-Jürgen Dipl.Ing., D-75015 Bretten (DE); Berndt, Malte Dr. Dipl.Chem., D-74889 Sinsheim-Rohrbach (DE); Meister, Martin Dipl.Ing., D-74889 Sinsheim (DE)
(74) Vertreter: Twelmeier, Ulrich, Dipl. Phys.

(56) Entgegenhaltungen:
- EP-A- 0 218 124
- EP-A- 0 388 094
- EP-A- 0 403 984
- EP-A- 0 505 832
- US-A- 4 405 507

## Beschreibung

Die Erfindung betrifft einen Katalysator zum Spalten von Ozon. Ozon ist ein starkes Oxidationsmittel und stellt deshalb, abhängig von seiner Konzentration in Luft, ein Gesundheitsrisiko für den Menschen dar. Die maximal zulässige Konzentration von Ozon am Arbeitsplatz (MAK-Wert) ist deshalb in Deutschland auf 0,1 ppm entsprechend 200 µg/m³ festgelegt.

Ozon kann in industriellen Anlagen, aber auch bei Büromaschinen (Fotokopiergeräte, Laserdrucker) sowie zum Zwecke des Keimfreimachens (z.B. in Hallenbädern und medizinischen Operationsräumen) erzeugt werden, ferner in Ballungszentren im Freien in Gegenwart von Luftschadstoffen in Verbindung mit Sonneneinstrahlung.

Die Ozonkonzentration in Luft kann durch thermische, adsorptive oder katalytische Verfahren herabgesetzt werden.

Die JP 1-127 040 und JP 63-126 525 beschreiben Verfahren zur Beseitigung von Ozon aus Gasgemischen, bei denen das Gasgemisch zur Umwandlung von Ozon in Sauerstoff über einen Katalysator aus Aktivkohle und Manganoxid geleitet wird. Eine Variante dieses Verfahrens beschreibt die JP 59-42 023, bei der anstelle von Manganoxid Eisenhydroxid oder Eisenoxidhydrat verwendet wird. Die Aktivkohle adsorbiert Ozon, und das Manganoxid oder das Eisenhydroxid beschleunigt auf katalytischem Wege die Zersetzung des Ozons. Nachteilig dabei ist, dass die Aktivkohle nicht nur Ozon adsorbiert, sondern auch andere Luftschadstoffe, z.B. Stickoxide, und deshalb durch die Adsorption der anderen Luftschadstoffe rasch inaktiv wird. Die Verwendung von Manganoxid und Eisenhydroxid hat den Nachteil, dass diese Substanzen eine verhältnismässig geringe katalytische Aktivität haben, sodass man große Mengen davon benötigt, was wiederum nachteilig ist, weil der Katalysator, der von Atemluft durchströmt wird, Spuren der katalytisch aktiven Substanz an die Luft abgibt. Schwermetallimmissionen sind aber ebenfalls unerwünscht.

Aus der DE-40 41 088 C2 ist es bekannt, vor einem Ozonfilter aus Aktivkohle und/oder Mangan-IV-Oxid einen beheizten Platinkatalysator vorzusehen, der die Stickoxide in Stickstoff und Sauerstoff umwandelt und dadurch die Adsorption von Stickoxiden an der Aktivkohle vermindert, so dass diese mehr Ozon binden kann.

Nachteilig dabei ist, dass man dazu einen beheizten Katalysator benötigt und dass das Aktivkohlefilter bestimmungsgemäss viel Raum beansprucht, so dass es schwierig ist, eine solche Anordnung in kompakten Geräten vorzusehen.

Aus der DE-A-30 29 948 ist es bekannt, den Ozongehalt in der Passagierkabine von hochfliegenden Flugzeugen dadurch zu vermindern, dass man die ozonhaltige Luft über einen Metallkatalysator leitet, bei dem es sich um einen beheizten, monolytischen Körper handelt. Ein solcher Körper benötigt ebenfalls viel Platz für seinen Einbau.

Aus der EP 0 388 094 A1 sind Katalysatoren zum Spalten von Ozon bekannt, deren Träger ein Netz sein kann. Als katalytisch wirksame Substanzen sind dabei auch Platin und Palladium genannt, wobei offen bleibt, ob diese beheizt werden müssen oder nicht. Soweit in dieser Druckschrift Beispiele angegeben sind, handelt es sich um Katalysatoren auf der Basis von Mangandioxid, welche beheizt werden und welche die oben erwähnten Nachteile haben.

Auch aus der US-A-4,405,507 sind Edelmetallkatalysatoren auf netzförmigen Trägern zum Spalten von Ozon bekannt, wobei mehrere solche Träger hintereinander angeordnet werden. Temperaturen zwischen 50° F und 500° F sind lediglich angegeben in Verbindung mit relativ dicken Katalysatorträgern aus Cordierit-Scheiben. Ob netzförmige Katalysatoren zu beheizen sind oder nicht, ist in dieser Druckschrift nicht offenbart.

Der vorliegenden Erfindung liegt die Aufgabe zugrunde, einen preiswerten Katalysator zum Spalten von Ozon bereitzustellen, der ohne Schwierigkeiten in Klimageräte, Lüftungsanlagen und Automobile eingebaut werden kann und gleichwohl eine wesentliche Verminderung des Ozongehalts in der Atemluft bewirkt.

Diese Aufgabe wird gelöst durch die Verwendung eines Katalysators mit den im Anspruch 1 angegebenen Merkmalen. Vorteilhafte Weiterbildungen der Erfindung sind Gegenstand der Unteransprüche.

Erfindungsgemäss wird ein netzförmiger Katalysator verwendet, der mit einem Edelmetall beschichtet ist und bei normaler Umgebungstemperatur betrieben wird, mithin nicht beheizt ist. Vor dem Netz ist in einem Abstand vom Netz ein weiteren Netz angeordnet, welches nicht mit Edelmetall beschichtet ist.

Das hat folgende Vorteile:
- Ein Netz ist ein flächiges Gebilde und kann raumsparend selbst in bereits vorhandene Anlagen und Geräte eingebaut werden, z.B. in vorhandene Zuluftkanäle zum Innenraum von Automobilen, an der Abströmseite von Klimageräten und Lüftungsanlagen, ferner auch in Geräten und Maschinen wie Fotokopiergeräten, die Ozon erzeugen, vorzugsweise vor dem Austritt von Luft, die mit einem Gebläse durch das Gerät bzw. die Maschine geleitet wird. Das flächenhafte Netz benötigt selbst nur minimalen Raum und kann beliebigen Strömungsquerschnitten angepaßt werden. Wesentliche Änderungen an Geräten, Maschinen oder Automobilen sind für seinen Einsatz nicht erforderlich.
- Netze können sehr feine Maschen haben. Je geringer die Maschenweite ist, desto größer ist die wirksame Katalysatoroberfläche und desto größer ist die Umsetzungsrate des Katalysators. Die Maschenweite ist nach unten lediglich begrenzt durch die für seine Herstellung aufzuwendenden Kosten und durch den in Kauf zu nehmenden Druckverlust.
- Da Netze sehr dünn sind, können auch einige Netze zu einem geschichteten Katalysator zusammengefaßt werden, ohne eine zu große Dicke zu erreichen. Günstige Ergebnisse (hohe Absenkung des Ozongehaltes) kann man aber schon mit einem einlagigen Katalysatornetz erreichen; die Umsetzungsrate kann durch Verwenden einer zweiten oder dritten Lage erhöht werden. Mehr als zwei oder höchstens drei Lagen werden nicht empfohlen.
- Der Katalysator verwendet als katalytisch wirksame Substanz ein Edelmetall, insbesondere Platin oder Palladium. Damit erhält man eine wesentlich höhere katalytische Aktivität schon bei niederer Temperatur mit der Folge, dass man verglichen mit Unedelmetallkatalysatoren wie solchen auf Basis von Manganoxid mit geringsten Mengen an katalytisch wirksamem Metall auskommen kann. Da macht den Katalysator zum einen preiswert und reduziert zum anderen die Mengen an katalytisch wirksamer Substanz, die den Katalysator mit der Atemluft verlassen können.
- Durch die Verwendung von Edelmetall, insbesondere Platin oder Palladium, als katalytisch wirksamer Substanz hat man schon bei normaler Umgebungstemperatur und einlagigem Netz deutliche Absenkungen des Ozongehaltes in Atemluft.
- Der Katalysator muss nicht beheizt werden.
- Ein Netz ist ein denkbar einfacher und preiswerter Träger.
- Ein Netz kann auch nahezu beliebig gekrümmt und dadurch seinem Einsatzort angepaßt werden.

Als Netze eignen sich besonders Drahtnetze, die zur Erhöhung der wirksamen Oberfläche und zur Verankerung des Edelmetalls z.B. in an sich bekannter Weise zunächst nach einem wash-coat-Verfahren mit einer Aluminiumoxidschicht überzogen werden, bevor sie mit einer Edelmetallsalzlösung getränkt und/oder kalziniert werden. Eine andere vorteilhafte Möglichkeit, das Edelmetall auf einem Drahtnetz zu verankern, besteht darin, für das Drahtnetz einen aluminiumhaltigen Stahl zu nehmen und das Netz an Luft zu glühen, wodurch in einer Oberflächenschicht das Aluminium in Aluminiumoxid überführt wird, auf welchem dann das Edelmetall verankert wird.

Anstelle eines Netzes kann aber auch ein feinmaschiges Streckmetall verwendet werden. Das soll vom Patentanspruch umfaßt sein.

Anstelle eines Drahtnetzes kann auch ein Kunststoffnetz verwendet werden. Auf dem Kunststoffnetz kann das katalytisch wirksame Edelmetall nach Verfahren verankert werden, die zum Metallisieren von Kunststoffen an sich bekannt sind, insbesondere das Beschichten in chemischen Metallisierungsbädern, das Beschichten durch chemische Abscheidung aus der Dampfphase (CVD-Verfahren) oder das Beschichten durch physikalische Abscheidung aus der Gasphase (PVD-Verfahren) oder durch Aufstäuben in einer Unterdruckkammer.

Je kleiner die Maschenweite ist, desto größer ist die Umsetzungsrate des Katalysators. Die Maschenweite ist zweckmässigerweise kleiner als 2 mm, vorzugsweise kleiner als 1 mm; wenn es der auftretende Druckverlust zuläßt, kleiner als 0,5 mm. Netze mit der Feinheit von Fliegendraht sind für Zwecke der Erfindung verwendbar.

Vor dem Netz, welches mit katalytisch aktivem Edelmetall beschichtet ist, ist in einem gewissen Abstand, vorzugsweise in einem Abstand zwischen 1 und 3 mm, am besten in einem Abstand zwischen 1 und 2 mm, das weitere Netz angeordnet, welches vorzugsweise nicht mit Edelmetall beschichtet ist. Ein solches davor angeordnetes Netz kann die Wirksamkeit des Katalysators erheblich erhöhen, obwohl es selbst nicht katalytisch aktiv ist. Die Anordnung "vor" dem katalytisch aktiven Netz bedeutet, daß die Luft zunächst das katalytisch nicht aktive Netz durchströmt und dann das katalytisch aktive Netz.

### Beispiel :

Einem Katalysator aus einem Streckmetall, Werkstoff Stahl Nr. 1.4842, mit Maschen, deren Maschenweite zwischen 0,2 und 1,5 mm liegt, als Katalysatorträger und mit Platin als katalytisch aktiver Beschichtung wurde ein unbeschichtetes Streckmetall vorgeschaltet. Diese Anordnung wurde von Luft mit einem Ozongehalt von 0,5 bis 1 ppm durchströmt. Bei Zimmertemperatur und einem Luftdurchsatz von 100 l pro Stunde und cm² Katalysatorfläche ergab sich ein Ozonabbau um 67 %. Unter denselben Bedingungen stieg der Ozonabbau bei Nachschaltung eines weiteren, mit Platin beschichteten Streckmetalls im Abstand von 1,5 mm auf 76 %. Das Nachschalten eines dritten mit Platin beschichteten Streckmetalls erhöhte den Ozonabbau praktisch nicht mehr.

Der erfindungsgemäße Katalysator schafft einen Ozonabbau nicht nur bei normaler Umgebungstemperatur (20°C), sondern auch bereits mit etwas geringerer Aktivität bei 0°C. Eine Beheizung des Katalysators ist entbehrlich.

### Vergleichsbeispiel:

In Abwandlung des obigen Beispiels wurde das vorgeschaltete unbeschichtete Streckmetall weggelassen und nur der Katalysator aus dem mit Platin beschichteten Streckmetall unter sonst gleichen Bedingungen durchströmt. Bei einem Durchsatz 100 l pro Stunde ergab sich ein Ozonabbau um nur 38 %.

## Patentansprüche

1. Verwendung eines unbeheizten Katalysators aus einem netzförmigen Träger, welcher mit Edelmetall beschichtet ist und vor welchem in einem Abstand ein weiteres Netz angeordnet ist, welches nicht mit Edelmetall beschichtet ist, zum Spalten von Ozon, welches in Luft enthalten ist, die durch den Katalysator hindurchströmt.

2. Verwendung eines Katalysators nach Anspruch 1, **dadurch gekennzeichnet,** daß der netzförmige Träger ein feinmaschiges Streckmetall ist.

3. Verwendung eines Katalysators nach Anspruch 1, **dadurch gekennzeichnet,** daß der netzförmige Träger ein Kunststoffnetz ist.

4. Verwendung eines Katalysators nach Anspruch 1 oder 2, **dadurch gekennzeichnet,** daß der netzförmige Träger aus einem oberflächlich oxidierten, Aluminium enthaltenden, Stahl besteht.

5. Verwendung eines Katalysators nach Anspruch 3, **dadurch gekennzeichnet,** daß durch naßchemische Abscheidung, durch chemische Dampfabscheidung (CVD) oder durch physikalische Dampfabscheidung (PVD) oder durch Aufstäuben mit Edelmetall beschichtet ist.

6. Verwendung eines Katalysators nach einem der vorstehenden Ansprüche, **dadurch gekennzeichnet,** daß der Abstand zwischen dem netzförmigen Träger und dem weiteren Netz zwischen 1 und 3 mm, vorzugsweise zwischen 1 und 2 mm beträgt.

7. Verwendung eines Katalysators nach einem der vorstehenden Ansprüche, **dadurch gekennzeichnet,** daß zwei mit Edelmetall beschichtete Netze einander überdeckend angeordnet sind, wobei vor dieser Anordnung noch ein nicht mit Edelmetall beschichtetes weiteres Netz angeordnet ist.

## Claims

1. The use of a catalyst which is un-heated and consists of a carrier in the form of a net which is coated with a precious metal and in front of which and at a distance therefrom there is provided a further net which is not coated with precious metal for the catalyst.

2. The use of a catalyst as claimed in claim 1 characterized in that the carrier in the form of a net is a fine-meshed expanded metal.

3. The use of a catalyst as claimed in claim 1 characterized in that the carrier in the form of a net is a net made of plastic.

4. The use of a catalyst as claimed in claim 1 or 2 characterized that the carrier in the form of a net consists of a steel which contains aluminium and is oxidized at its surface.

5. The use of a catalyst as claimed in claim 3 characterized in that the carrier in the form of a net is coated with precious metal by chemical deposition from aqueous solutions, by chemical vapor deposition (CVD), by physical vapor deposition (PVD) or by sputtering.

6. The use of a catalyst as claimed in any of the preceding claims characterized in that the distance between the carrier in the form of a net and the further net is between 1 mm and 3 mm, preferably between 1 mm and 2 mm.

7. The use of a catalyst as claimed in any of the preceding claims, characterized in that two nets which are coated with precious metal are provided in mutual superimposition and another net which is not coated with precious metal is provided in front of the arrangement of said two nets.

## Revendications

1. Utilisation d'un catalyseur non chauffé constitué par un support réticulaire qui a été enduit avec un métal noble et devant lequel est disposé, à une certaine distance, un réseau supplémentaire qui n'a pas été enduit avec un métal noble, pour l'élimination de l'ozone contenu dans l'air, qui traverse le catalyseur.

2. Utilisation d'un catalyseur selon la revendication 1, caractérisée en ce que le support réticulaire est un métal déployé à mailles fines.

3. Utilisation d'un catalyseur selon la revendication 1, caractérisée en ce que le support réticulaire est un réseau en matière synthétique.

4. Utilisation d'un catalyseur selon la revendication 1 ou 2, caractérisée en ce que le support réticulaire est constitué d'un acier oxydé en surface contenant de l'aluminium.

5. Utilisation d'un catalyseur selon la revendication 3, caractérisée en ce que le support réticulaire a été enduit avec un métal noble par précipitation chimique par voie humide, par déposition en phase gazeuse par procédé chimique (CVD) ou par déposition en phase gazeuse par procédé physique (PVD) ou encore par saupoudrage.

6. Utilisation d'un catalyseur selon l'une quelconque des revendications précédentes, caractérisée en ce que la distance entre le support réticulaire et le réseau supplémentaire s'élève entre 1 et 3 mm, de préférence entre 1 et 2 mm.

7. Utilisation d'un catalyseur selon l'une quelconque des revendications précédentes, caractérisée en ce qu'on dispose, en recouvrement réciproque, deux réseaux enduits d'un métal noble, un réseau supplémentaire qui n'a pas été enduit avec un métal noble étant encore disposé devant cet agencement.
